# EUROPEAN PATENT APPLICATION

(11) **EP 4 793 023 A1**
(43) Date of publication of application: **19.08.2026**
(21) Application number: 25383204.2
(22) Date of filing: 05.11.2025
(51) Int. Cl.: B29C 63/02, B32B 37/12, B41F 19/00

(54) **SYSTEM AND METHOD FOR APPLYING ADHESIVE GLUES BY MEANS OF DIGITAL INKJET PRINTING**

(71) Applicant: Barberan S.A., 08860 Castelldefels (Barcelona) (ES)
(72) Inventor: BARBERAN LATORRE, Jesus Francisco, 08860 Castelldefels (Barcelona) (ES)
(74) Representative: Plasseraud IP

(57) **Abstract**

The present invention relates to a system and method for applying adhesive glues by means of digital inkjet printing, for bonding two elements (1, 2), comprising a processing unit that is adapted for selecting the amount of adhesive glue (4) to be deposited on the first element (1) and/or on the second element (2), so that the amount is such that at the time before bonding the elements (1, 2) it is less on at least one end (1.2, 2.2) of the surfaces (1.1, 2.1) to be bonded with respect to the areas further away from the at least one end (1.2, 2.2) of the surfaces (1.1, 2.1) to be bonded, so that when bonding both surfaces (1.1, 2.1) the adhesive glue (4) does not overflow from the at least one end (1.2, 2.2) of the surfaces (1.1, 2.1) to be bonded; and for controlling the digital inkjet print head to apply said amount and/or type of adhesive glue (4) on the first element (1) and/or the second element (2).

## Description

### TECHNICAL FIELD

The present invention relates to a system and method for applying adhesive glues by means of digital inkjet printing for bonding at least two elements together.

### BACKGROUND OF THE INVENTION

Adhesive glues or adhesives have the function of bonding and attaching two substrates, for example, a base material to a coating material or to other layers.

The glues, when they are carrying out their adhesion purpose, are solid, while, for applying, transporting, spreading them, and so on, on the surfaces to be bonded and even when they have been applied to the element(s) to be bonded, they need to have a certain mobility to ensure penetration into the surfaces of said elements.

Depending on the way they turn into a liquid, there are different types of adhesive glues:
- Cold glues, to which a solvent or diluent has been added for turning into a liquid.
- Hot or hot-melt glues, which melt with the heat and turn into a liquid.

Regarding the physical bonding process, adhesion can be defined as the force capable of holding together the molecules of materials of different nature. While cohesion is used to designate the force of attraction between the molecules of the same material. In an application for bonding two elements, wherein a suitable glue that causes good adhesion has been selected, the maximum strength of said bond is obtained, as a general rule, with a thickness of the adhesive layer that is suitable to fill the existing recesses on the surfaces of the elements to be bonded due to the roughness and pores thereof.

Any thickness of the glue layer that exceeds said minimum thickness generates a bonding of lower resistance. This is due to the internal cohesion of the glue. Normally, if the glue that is used with the materials to be bonded has good adhesion, this bonding force is always greater than the internal cohesion force of the glue itself. Therefore, the amount of glue adjusted to the roughness of the surfaces is the one that achieves the strongest bonding.

Currently, the most widespread methods for applying adhesive glues are:
- By means of roller, consisting of applying the glue by means of an applicator roller on which the glue is dosed with a dosing roller.
- By means of applicator lips, consisting of dosing the glue through a slot and by varying the speed of glue passing therethrough, the amount of glue applied is varied.

Also, although to a lesser extent, certain types of glue are applied by means of spray guns, with swirl nozzles or with different spraying systems.

The methods of application by means of roller or by means of lip are contact methods, so they have the disadvantage that, if the product where it is applied is contaminated, then these also become contaminated, spoiled, worn out (for example, by abrasion), etc.

Another drawback of these application methods is that the grammage, or amount of product that can be applied per unit area of the elements to be bonded, is uniform (within certain tolerances). Therefore, in case an operator wants to apply a different amount of product depending on the area of the elements to be bonded, additional rollers and/or lips must be used, with the drawback of having to increase the size of the system.

One particular application where the roller technique is used is in gluing edge bands by using a machine commonly known as an edge bander. It should be noted that an edge band is a narrow strip of material (such as PVC, ABS, melamine, wood or veneer), usually in coil form, which is adhered to the edge of a panel (e.g., chipboard, MDF or plywood) in order to cover a side surface of the panel, wherein the core of the panel is visible, thereby improving the appearance and durability of the panel. Therefore, the main function of the edge band is to embellish the finish of the panel and protect the edges against impact, moisture or wear.

The edge bands are usually applied by hot-melt adhesive (hot-melt glue) using an edge banding machine or by heat application using a pre-glued edge band. Normally in these cases, with the edge banding machine, the adhesive is applied directly on a side surface of the panel (the exposed side face of the board) by means of a roller. For this purpose, the panel enters the machine and a roller applies a thin layer of hot liquid adhesive on the side surface of the panel, immediately after which the edge band, for example, made of plastic, is fed and pressed against the molten adhesive and a side surface of the panel. The advantages of this method are that stronger adhesion is achieved than using the well-known pre-glued edge bands to glue them to the panels with the pre-glued edge banders, resulting in better resistance to moisture and heat.

However, the problem with this technique is that in order to avoid insufficient gluing with the roller, a layer of adhesive is applied so that once it contacts the edge band to be applied, the adhesive overflows from the sides, which then needs to be removed, in other words, the surface of the panel is impregnated with adhesive that needs to be cleaned. This situation requires a subsequent cleaning process, which slows down production in industrial production processes or may even lead to defects as areas with adhesive residues may remain if the cleaning has not been thorough. Furthermore, it also results in extra costs due to wasted adhesive, as well as the need for non-stick and cleaning products. Moreover, residue is generated which has to be treated afterwards.

### DESCRIPTION OF THE INVENTION

In order to meet this objective and solve the technical problems discussed so far, as well as provide additional advantages that can be derived later, the present invention provides a system for applying adhesive glues by means of digital inkjet printing, for bonding at least one surface of a first element and a surface of a second element,
where both surfaces to be bonded have substantially identical areas,
wherein the system comprises:
   - at least one digital inkjet print head, and
   - a processing unit functionally connected to the at least one digital inkjet print head,
wherein the processing unit is adapted for:
   - selecting the amount of adhesive glue per unit area to be deposited on the surface of the first element and/or on the surface of the second element, so that the amount of adhesive glue per unit area applied on the surfaces to be bonded is such that at the time of bonding and/or before bonding between the surfaces to be bonded, the amount of adhesive glue per unit area is less in at least one area corresponding to at least one end of the surfaces to be bonded with respect to the areas further away from the at least one end of the surfaces to be bonded, so that when bonding both surfaces the adhesive glue does not overflow from the at least one end of the surfaces to be bonded, and/or
   - selecting the type of adhesive glue to be applied on at least one area corresponding to at least one end of the surfaces to be bonded, so that at the time of bonding the elements the adhesive glue deposited on the at least one area corresponding to that end is cured and/or fixed before the adhesive glue deposited on the remaining areas of the surfaces to be bonded, so that when bonding both surfaces the adhesive glue does not overflow from the at least one end of the surfaces to be bonded; and
   - controlling the digital inkjet print head to apply said amount and/or type of adhesive glue on the surface of the first element and/or the surface of the second element.

In the context of the invention, bonding is understood to be equivalent to fixing or gluing the surfaces of the elements so that they form a single assembly.

The surface of the elements to be bonded is considered to not necessarily be a flat surface, but may include changes in curvature or orientation such as edges. Preferably, the surface of the elements to be bonded may also be a continuous surface of one element to be bonded with the continuous surface of the other element, although it is not ruled out that at least one of these surfaces of the elements to be bonded is not continuous, for example because one of the surfaces of the elements to be bonded comprises an indentation which divides said surface in two or more.

It is worth mentioning that when it is mentioned that "the processing unit is adapted for selecting the amount and/or type of adhesive gel per unit area to be deposited on the surface of the first element" and/or "on the surface of the second element and/or for controlling the digital inkjet print head to apply said amount and/or type of adhesive glue", it is not ruled out that the adhesive glue is a glue having at least two components, (which separately might not be called adhesive glues), but at the time they come in contact (which will result in a mixture, dispersion or a chemical reaction for the formation of the adhesive suitable for bonding the at least two elements) they form the adhesive glue on the surface of the first element and/or on the surface of the second element.

Time before bonding is considered to be the instant before contacting a surface of one element with the surface of the other element, so that bonding occurs with or without pressing.

At least one end is understood to mean that said end to be bonded of the surface of one element is the end coinciding with the corresponding end of the surface of the other element, e.g., a side. For example, in the case where a first element is a sheet and a second element is a panel, and where the sheet comprises a larger surface than a side surface of the panel, the ends of the sheet would be the area of said surface which, at the time of bonding the two elements, would be limited by the ends of the side surface of the panel (in other words, in the present case the "ends" of the sheet would be fictitious, while the ends of the panel would be physical ends of the side surface).

By using digital inkjet printing, this system achieves micrometric precision, allowing the amount of glue to be applied on specific areas to be selected in order to produce perfect bonding of the elements, and at the same time, after bonding elements, the glue does not protrude from the ends or sides of the surface to be bonded of the elements, thus avoiding subsequent cleaning, and consequently resulting in greater productivity and lower associated costs.

According to a feature of the invention, the type of adhesive glue applied on the at least one area corresponding to the at least one end of the surfaces to be bonded is suitable for withstanding external harsh conditions such as abrasion, humidity, high temperature, mechanical strength, etc. Therefore, even if the adhesive glue applied is the minimum necessary for the bonding, it is not deteriorated by external harsh conditions, consequently saving the amount of glue applied which can be selected in amount by the processing unit taking into account such properties.

According to another feature of the invention, the processing unit comprises a set of data on the physical characteristics of the surfaces to be bonded, the processing unit being configured to select the type and/or amount of adhesive glue to be deposited based on the data on the physical characteristics of the surfaces to be bonded.

Given this configuration, the system combines the amount required for the adhesive on two common surfaces with the amount required to cover, for example, irregularities, roughness, porosity, etc., so that the processing unit selects the amount of glue required for the adhesive glue to penetrate and, after the contact between surfaces prior to the final bonding, a uniform sheet of glue remains to secure the bond.

Preferably, the first element is a substrate, for example, a panel, and the second element is a fixing sheet, wherein the at least one end of the surfaces to be bonded is an edge of the substrate and/or edge of the fixing sheet. In other words, the system is preferably intended for fixing an edge band on a side surface of a substrate or panel, the end being the perimeter edges of the side surface of the panel, and can be applied to one or all four ends of the side surface of the panel depending on the needs.

Sheet is understood to be a product, where its largest dimension is the length and width, although the latter is usually smaller than the length, but its thickness is minimal.

According to another feature of the invention, the processing unit is configured to apply the amount of adhesive glue per unit area so that, at the time of bonding a substrate and two fixing sheets, it comprises adhesive glue for bonding at a joining chamfer between fixing sheets. Thus, the processing unit could apply the amount of glue directly on the chamfer, or calculate the amount of glue needed to impregnate said chamfer with adhesive glue during bonding and produce the correct bonding of the sheets at the joint thereof. This avoids the creation of a weak point in the corners of panels, for example, which could cause the panels to detach when rubbed as there is no joint at that point, or to avoid overflowing if too much glue has been applied.

It is additionally provided that preferably, the system comprises at least one selective curing and/or fixing means, wherein the processing unit is adapted for controlling the at least one curing and/or fixing means to at least partially cure and/or fix the adhesive glue deposited on at least one area corresponding to at least one end of the surfaces to be bonded. This configuration is suitable, for example, when there is a desire to seal the end areas so that the adhesive does not go beyond these boundaries, or for vertical glue applications where there is a desire to prevent the adhesive from slipping before bonding, or simply to speed up the gluing process.

It should be mentioned that "selective" curing and/or fixing is understood to mean that both a certain degree of cure and/or fixing is applied to the adhesive glue and that a different degree of curing and/or fixing is applied to different areas of the surfaces to be bonded.

It is worth mentioning that the existence of adhesive glues which, without being cured, could be in a solid state and have certain "fixing" qualities although their resistance to movement between the at least two elements to be bonded is not at its maximum (e.g., a PUR (Polyurethane) hot-melt adhesive). This type of adhesive glue, which is solid when supplied, is usually heated in order to be melted so that it can be applied to at least one of the elements to be bonded. This type of adhesive glue usually reacts with water (usually with ambient humidity) and takes 48 to 72 hours to cure completely. However, after applying it on at least one element to be bonded, it cools and becomes solid again, thus reaching a certain resistance to movement between the at least two elements to be bonded (although not its maximum resistance to movement as if it were fully cured). In other words, at the time of bonding between the at least two elements to be bonded, the strength of the bond between the at least two elements to be bonded will not be the maximum and said adhesive glue will cure over time until it reaches its maximum degree of curing, where its resistance to movement of the two elements to be bonded will be maximised.

According to another feature of the invention, the adhesive glue is a glue having at least two components (although three or more components are not ruled out) and wherein the system comprises at least two independent digital inkjet print nozzles, each configured to apply a different component and wherein the processing unit is adapted for selecting the amount of the at least two components per unit area to be applied on the surface of the first element and/or on the surface of the at least one second element. Thus, the first component is applied by injection through a nozzle, and at least one other component with at least one other nozzle so that the at least two components after contact with each other form the adhesive suitable for bonding the elements.

Preferably, the contact between the at least two components (which will result in a mixture, dispersion or a chemical reaction for the formation of the adhesive suitable for bonding the at least two elements) is produced on the elements to be bonded, at the time of bonding and/or before bonding between the surfaces to be bonded, so that the components applied by means of the nozzles can have different physical and/or chemical characteristics than the final adhesive (i.e., the glue) (i.e., the adhesive formed after the contact of the at least two components), allowing the use in the nozzles of the at least two components with physical and/or chemical characteristics conducive to their injection by means of digital inkjet print heads, thus avoiding problems due to incompatibility with the injection heads themselves.

In this way, various adhesives can be applied by means of digital inkjet injection heads that would otherwise not have been possible.

Furthermore, this configuration allows for different adhesive possibilities based on the requirements for bonding between the at least two elements to be bonded, including taking into account the requirements for bonding different areas of the at least two elements to be bonded, based on the requirements of the particular bonding process, for example taking into account that a particular area of the surfaces to be bonded of the at least two elements to be bonded requires greater fixation because it is expected that this area will subsequently receive higher stresses than the rest of the areas of the surfaces to be bonded of the at least two elements to be bonded.

Due to the use and control of high-precision digital inkjet print heads and nozzles, where the droplets applied by inkjet are microscopic in size (on the order of picolitres), and the use of high resolution (e.g., 600 dpi or 1200 dpi) in the patterns of the at least two components to be applied on the at least two elements to be bonded, greater control of the bonding process of the at least two elements to be bonded is achieved, obtaining the desired proportion and position of the at least two components on the surfaces to be bonded of the at least two elements, thus perfectly controlling the contacts between the at least two components and thus achieving good mixtures, if that is what is sought, or good dispersions, etc., where necessary.

By having the versatility provided by the digital inkjet print heads (and therefore their nozzles) to "draw" any pattern of at least one first component on at least one area of the at least two elements to be bonded (in addition to the different combinations of adhesive application of the at least two components, obtaining different combinations of the at least two components on specific areas of the surfaces to be bonded of the at least two elements), an immense range of possibilities for designing the adhesive bonding of the at least two elements to be bonded, for example in relation to the physical/chemical properties of the surfaces to be bonded of the at least two elements, is achieved. For example, adhesive bonds with oriented flexibility, directional strength, chemical sealing in certain areas, etc. can be obtained. **In** other words, in addition to applying the at least two components, said components can be applied following specific patterns on the surfaces to be bonded of the at least two elements, so that the adhesive achieves different physical and/or chemical characteristics in different areas of the surfaces to be bonded of the at least two elements.

A reduction in residue is also achieved by using only the exact amount needed for suitable gluing, which is selected by the processing unit taking into account the parameters of the adhesive to be formed and the requirements of the bonding of the elements.

It also allows localised application with micron precision, preferably using piezoelectric inkjet and it is compatible with Industry 4.0, for example, with integration with artificial vision, digital traceability, and enabling automatic settings.

The application of components makes it possible to use multi-component, e.g., two-component, glues or adhesives (i.e., components that react with each other after contact), or vary the properties of a component with respect to the initial properties (i.e., components that are mixed or dispersed after contact, etc.), thus obtaining adhesives with different properties, for example, having a water-based injectable adhesive and mixing it with water like the other component, i.e., diluting it. In other words, after applying the components on different areas, mixtures, dispersions, reactions, etc. are obtained after contact, which will form the adhesive in those areas.

According to another feature of the invention, the processing unit is adapted for selecting the amount of the adhesive glue per unit area to be applied on the surface to be bonded of the first element and/or on the surface to be bonded of the at least one second element to be bonded taking into account the required open time for the adhesive glue.

Open time in the context of the invention is understood as the period in which the adhesive glue can still be applied and the parts can be assembled with full adhesion efficiency. This allows the adhesive glue to flow, penetrate, spread over the surface to be bonded of the first element and/or second element prior to curing and/or fixing of said adhesive glue.

According to another aspect of the invention, a method for applying adhesive glues by means of digital inkjet printing is also contemplated which carries out the steps of applying adhesive glues of the aforementioned system.

### BRIEF DESCRIPTION OF DRAWINGS

Figure 1A shows a schematic view of a roller applying glue on a side surface of a substrate according to the known state of the art.
Figure 1B shows a schematic view of the glue profile once applied on the side surface in figure 1A.
Figure 1C shows a schematic view of the edge band glued to the side surface of the substrate in figure 1B.
Figure 2 shows a schematic view of a preferred embodiment of the invention in which glue has been applied to the sheet or edge band according to the invention.
Figure 3 shows a schematic view of an alternative embodiment of the invention in which glue has been applied to the edge of a substrate according to the invention.
Figure 4 shows a schematic view of the edge band and the side surface once bonded according to the invention.
Figure 5A shows a schematic detail view, according to the state of the art, of a corner of a substrate where two edge bands converge at a perpendicular angle.
Figure 5B shows a schematic detail view, according to the state of the art, of a corner of a substrate where two edge bands converge at an angled chamfer.
Figure 6 shows a schematic detail view, according to the invention, of a preferred embodiment of a corner of a substrate where two edge bands converge at a perpendicular angle.
Figure 7 shows a schematic detail view, according to the invention, of a preferred embodiment of a corner of a substrate where two edge bands converge at an angled chamfer.
Figure 8 shows a schematic view of the system object of the invention.

### PREFERRED EMBODIMENT OF THE INVENTION

The figures described correspond to a non-limiting practical exemplary embodiment and there may be variants in the formation of the system as long as the object of the same is not altered.

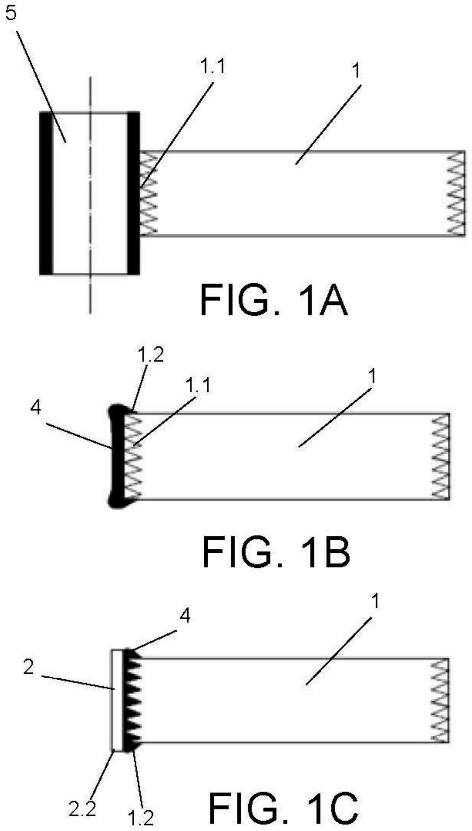

As indicated in the known state of the art and as shown in figure 1A, for the practical embodiment of applying an edge band (2) or sheet on the side surface (1.1) of a substrate (1), normally a roller (5) is used for bonding both elements, said roller applying the adhesive on the side surface (1.1) of the substrate (1) so that once the adhesive (4) has been applied, it will be as shown in figure 1B. Subsequently, the edge band (2) is applied to bond the two elements. However, with this technique of applying adhesive glue, as shown in figure 1C, the adhesive glue protrudes from the end parts of the side surface (1.1), soiling the surface of the substrate (1). This requires subsequent cleaning to remove the excess.

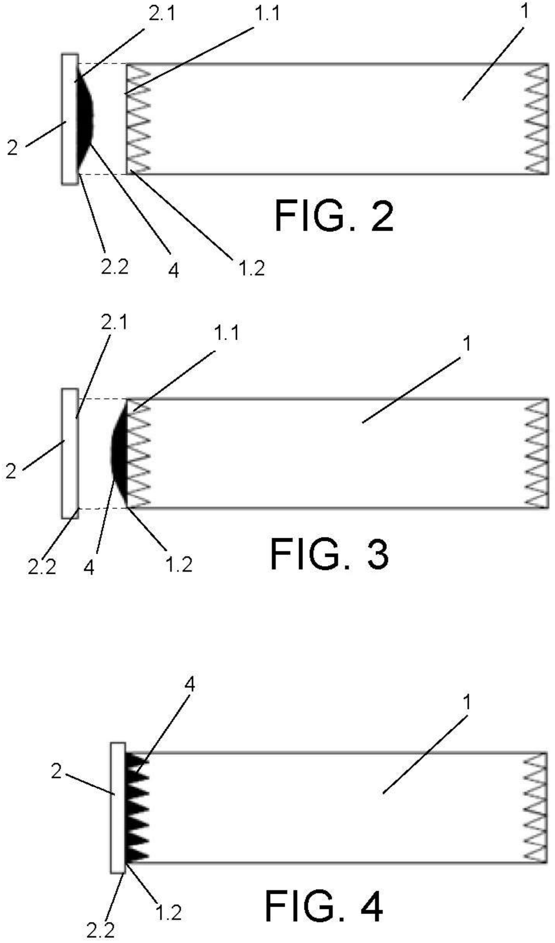

On the other hand, the present invention seeks to avoid said excess that overflows at the time of bonding the elements (1, 2). As shown in figure 2, according to a practical embodiment of the invention, the adhesive glue is deposited by the system on the edge band (2) to be bonded to the side surface (1.1) of a substrate (1) in accordance with the commands given by a processing unit of the system. This figure shows how the adhesive deposited prior to bonding, the adhesive glue (4) by the system per unit area, is less in at least one area corresponding to at least one end (1.2) of the surfaces (1.1, 2.1) to be bonded with respect to the areas further away from the at least one end, i.e., it has a greater amount in the middle area than in the area closer to the edges.

According to an alternative embodiment, as can be seen in figure 3, adhesive is applied on the side surface (1.1) of the substrate (1) in the same way, i.e., by applying less amount on the ends (1.2) than in the middle area.

According to an alternative embodiment, not shown in the figures, the system is configured to apply the adhesive glue (4) by injection on both elements (1, 2) with a smaller amount on the ends (1.2, 2.2), so that proper gluing is produced with bonding, without the adhesive glue (4) overflowing as in the state of the art, as shown in figure 4.

Additionally and preferably, the processing unit includes data on the physical properties of the substrate (1) and the sheet (2), so that it applies a greater amount of glue (4) if the material is, for example, more porous, as is the case on the side surface of the boards, or panels, where due to the positioning or orientation of the wood fibres, it is more porous on the edge band than on the top and bottom surfaces. Physical properties can be understood as shape, size, and/or porosity of the material.

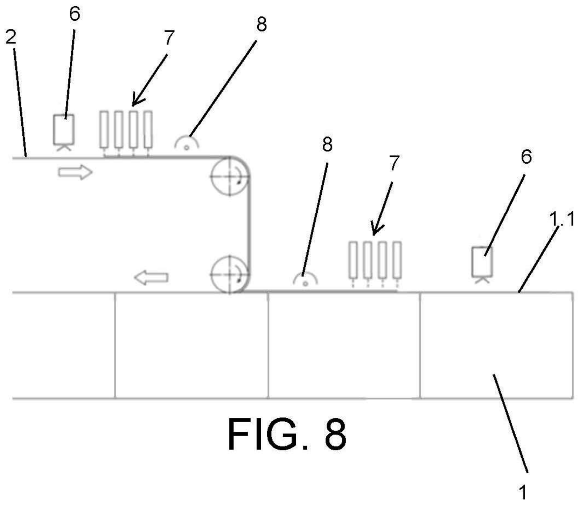

Figure 8 schematically shows a practical example of a system according to the invention, where a line applies the adhesive glue (4) by means of inkjet printing to the sheet or edge band (2), through a plurality of nozzles (7) that apply a smaller amount on the ends (2.2) according to the commands given by the processing unit. On the other line, the substrate (1) with the side surface (1.1) on which the edge band (2) that already has the adhesive will be glued, is displaced. As already mentioned in accordance with an alternative embodiment, and as shown in figure 8, the line that displaces the substrate (1) also comprises nozzles (7) for applying adhesive glue (4) by inkjet printing. The adhesive glue (4) is then applied on the substrate (1) and/or on the edge band (2) as required. Preferably, the plurality of nozzles (7) are distributed over the entire width of the edge band (2) and/or the side surface (1.1).

According to an alternative embodiment, the system comprises a scanner (6) for determining the physical properties of the substrate (1) and/or the sheet (2), so that the processing unit uses such information for the calculation of the amount of glue (4) per area to be applied.

According to an alternative embodiment, the system further comprises curing and/or fixing means (8), which are configured to apply, for example, heat or UV radiation, at certain points, for example, at the ends or edges, so that the glue (4) is fixed and/or cured at those points and there is time for the glue (4) to penetrate the substrate (1) in the remaining area for better bonding of the elements.

According to another alternative embodiment, the glue (4) used by the system is a glue (4) having at least two components (although three or more components are not ruled out), where each component is applied to the surfaces (1.1, 2.1) to be bonded by means of different nozzles (7).

It should be noted that, although it is mentioned that the glue (4) is a glue (4) having at least two components, it is not ruled out that at least one of the components acts as an adhesive glue (4), and that the other component is a reagent which modifies the physical and/or chemical properties of the glue (4).

The processing unit is configured to control the nozzles (7) such that a first component is applied on at least one surface (1.1, 2.1) to be bonded of the at least two elements (1, 2) to be bonded and at least one second component is applied on at least one surface (1.1, 2.1) to be bonded (note that it is not ruled out that the first component and/or the at least one second component are applied on different elements (1, 2)), so that at the time of bonding and/or before bonding between the first element (1) and the at least one second element (2) the at least two components contact each other forming the adhesive glue (4), suitable for the bonding of the at least two elements (1, 2).

An application of the glue (4) having at least two components could be the application of a first component on the entire surface (1.1) to be bonded of the first element (1), which would act as a normal adhesive glue (4), while at specific points of at least one end (1.2, 2.2) of the surfaces (1.1, 2.1) to be bonded, at least one second component is applied on the first component, so as to fix specific points in order to prevent the glue (4) from flowing beyond said ends (1.2, 2.2) and from penetrating before the bonding of both elements (1, 2).

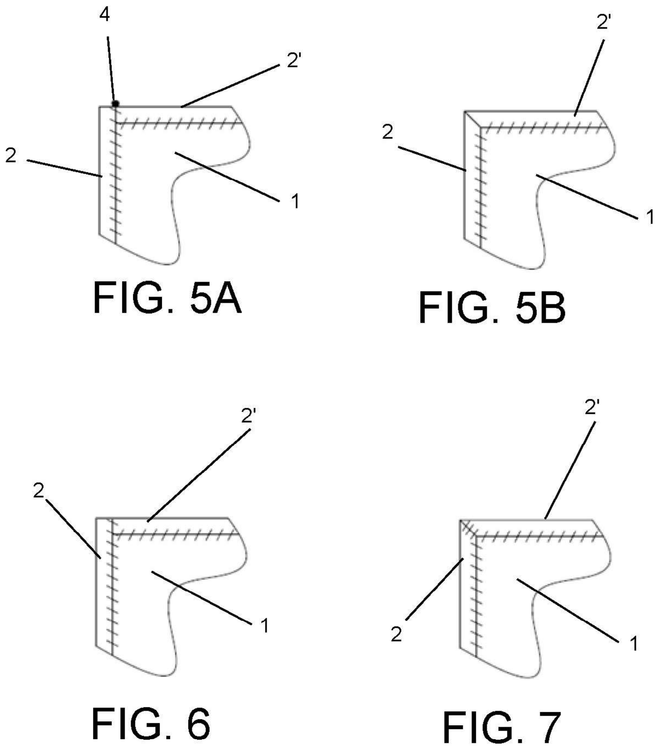

Another problem existing in the state of the art is the joining of two edge bands (2, 2') at a corner of a substrate (1). As shown in figure 5A with the roller method, when bonding the edge bands (2, 2') at the joint of a perpendicular angle between each other, the adhesive glue (4) flows and overflows leaving residue on the surface.

Another conflicting situation arises in angled joints, usually at 45° between edge bands, as shown in figure 5B. In these situations, glue cannot be applied with the roller to said joint or chamfer, so it is left without adhesive glue (4), which is a weak point prone to lifting with friction.

Thus, according to another alternative embodiment, the processing unit is configured to apply the amount of adhesive glue (4) necessary so that in the case of a joint between edge bands (2, 2') at a perpendicular angle, the glue flows to the outer or inner boundary of the joint to prevent the glue from overflowing, as shown in figure 6.

On the other hand, the processing unit is configured to control the nozzles (7) in order to apply adhesive glue on the chamfer, as shown in figure 7, since thanks to its micrometric precision it can apply glue in places where it was not possible until now.

## Claims

1. A system for applying adhesive glues by means of digital inkjet printing, for bonding at least one surface (1.1) of a first element (1) and a surface (2.1) of at least one second element (2), where both surfaces (1.1, 2.1) to be bonded have substantially identical areas,
wherein the system comprises:
- at least one digital inkjet print head (3), and
- a processing unit functionally connected to the at least one digital inkjet print head (3), **characterised in that** the processing unit is adapted for:
- selecting the amount of adhesive glue (4) per unit area to be deposited on the surface (1.1) of the first element (1) and/or on the surface (2.1) of the second element (2), so that the amount of adhesive glue (4) per unit area applied on the surfaces (1.1, 2.1) to be bonded is such that at the time of bonding and/or before bonding between the surfaces (1.1, 2.1) to be bonded, the amount of adhesive glue (4) per unit area is less in at least one area corresponding to at least one end (1.2, 2.2) of the surfaces (1.1, 2.1) to be bonded with respect to the areas further away from the at least one end (1.2, 2.2) of the surfaces (1.1, 2.1) to be bonded, so that when bonding both surfaces (1.1, 2.1) the adhesive glue (4) does not overflow from the at least one end (1.2, 2.2) of the surfaces (1.1, 2.1) to be bonded, and/or
- selecting the type of adhesive glue to be applied on at least one area corresponding to at least one end (1.2, 2.2) of the surfaces (1.1, 2.1) to be bonded, so that at the time of bonding the elements (1, 2) the adhesive glue (4) deposited on the at least one area corresponding to that end (1.2, 2.2) is cured and/or fixed before the adhesive glue (4) deposited on the remaining areas of the surfaces (1.1, 2.1) to be bonded, so that when bonding both surfaces (1.1, 2.1) the adhesive glue (4) does not overflow from the at least one end (1.2, 2.2) of the surfaces (1.1, 2.1) to be bonded; and
- controlling the digital inkjet print head to apply said amount and/or type of adhesive glue (4) on the surface (1.1) of the first element (1) and/or the surface (1.2) of the second element (2).

2. The system for applying adhesive glues according to the preceding claim, wherein the type of adhesive glue (4) applied on the at least one area corresponding to the at least one end (1.2, 2.2) of the surfaces (1.1, 2.1) to be bonded is suitable for withstanding external harsh conditions.

3. The system for applying adhesive glues according to claim 1 or 2, wherein the processing unit comprises a set of data on the physical characteristics of the surfaces (1.1, 2.1) to be bonded, the processing unit being adapted for selecting the type and/or amount of adhesive glue (4) to be deposited based on the data on the physical characteristics of the surfaces (1.1, 2.1) to be bonded.

4. The system for applying adhesive glues according to any one of the preceding claims, wherein the first element (1) is a substrate and the second element (2) is a fixing sheet, and wherein the at least one end (1.2, 2.2) of the surfaces (1.1, 2.1) to be bonded is an edge of the substrate and/or edge of the fixing sheet.

5. The system for applying adhesive glues according to the preceding claim, wherein the processing unit is adapted for applying the amount of adhesive glue (4) per unit area so that, at the time of bonding a substrate (1) and two fixing sheets (2, 2'), it comprises adhesive glue for bonding at a joining chamfer between fixing sheets (2, 2').

6. The system for applying adhesive glues according to any one of the preceding claims, comprising at least one selective curing and/or fixing means, and wherein the processing unit is adapted for controlling the at least one curing and/or fixing means to at least partially cure and/or fix the adhesive glue deposited on at least one area corresponding to at least one end (1.2, 2.2) of the surfaces (1.1, 2.1) to be bonded.

7. The system for applying adhesive glues according to any one of the preceding claims, wherein the adhesive glue (4) is a glue having at least two components and wherein the system comprises at least two independent digital inkjet print nozzles (7), each configured to apply a different component and wherein the processing unit is adapted for selecting the amount of the at least two components per unit area to be applied on the surface (1.1) of the first element (1) and/or on the surface (2.1) of the at least one second element (2).

8. The system for applying adhesive glues according to any one of the preceding claims, wherein the processing unit is adapted for selecting the amount of adhesive glue (4) per unit area to be applied on the surface (1.1) of the first element (2) and/or on the surface (2.1) of the at least one second element (2) to be bonded taking into account the required open time for the adhesive glue (4).

9. A method for applying adhesive glues by means of digital inkjet printing, for bonding at least one surface (1.1) of a first element (1) and a surface (2.1) of a second element (2), **characterised in that** it comprises the following steps:
- selecting by means of a processing unit functionally connected to at least one digital inkjet print head an amount of adhesive glue (4) per unit area to be applied on the surface (1.1) of the first element (1) and/or on the surface (2.1) of the second element (2), so that the amount of adhesive glue (4) per unit area deposited on the surfaces (1.1, 2.1) to be bonded is such that at the time before bonding the surfaces (1.1, 2.1) to be bonded, the amount of adhesive glue (4) per unit area is less in at least one area corresponding to at least one end (1.2, 2.2) of the surfaces (1.1, 2.1) to be bonded, so that when bonding both surfaces (1.1, 2.1) the adhesive glue (4) does not overflow from the at least one end (1.2, 2.2) of the surfaces (1.1, 2.1) to be bonded; and/or
- selecting the type of adhesive glue to be applied on at least one area corresponding to the at least one end (1.2, 2.2) of the surfaces (1.1, 2.1) to be bonded, so that at the time of bonding the surfaces (1.1, 2.1) to be bonded the adhesive glue (4) applied on at least one area corresponding to that end (1.2, 2.2) is cured and/or fixed before the adhesive glue deposited on the remaining areas of the surfaces (1.1, 2.1) to be bonded, so that when bonding both surfaces (1.1, 2.1) the adhesive glue does not overflow from the at least one end (1.2, 2.2) of the surfaces (1.1, 2.1) to be bonded; and
- applying by means of at least one digital inkjet print head the amount and/or type of adhesive glue (4) per unit area on the surface (1.1) of the first element (1) and/or the surface (2.1) of the second element (2).

10. The method for applying adhesive glues according to the preceding claim, wherein the processing unit receives data on the physical characteristics of the surfaces (1.1, 2.1) to be bonded, and wherein the type and/or the amount of adhesive glue (4) is selected based on the data on the physical characteristics of the surfaces (1.1, 2.1) to be bonded.

11. The method for applying adhesive glues according to any one of claims 9 to 10, wherein the first element (1) is a substrate and the second element (2) is a fixing sheet and wherein the at least one end (1.2, 2.2) of the surfaces (1.1, 2.1) to be bonded is an edge of the substrate and/or edge of the fixing sheet.

12. The method for applying adhesive glues according to the preceding claim, wherein the amount of adhesive glue (4) is applied per unit area so that, at the time of bonding the surfaces (1.1, 2.1) to be bonded at a joining chamfer between fixing sheets (2), it comprises adhesive glue for bonding with the substrate.

13. The method for applying adhesive glues according to any one of claims 9 to 12, wherein after applying the amount of adhesive glue (4) per unit area, at least partial curing and/or fixing of the adhesive glue (4) deposited on at least one area corresponding to the at least one end of the surfaces (1.1, 2.1) to be bonded is carried out.

14. The method for applying adhesive glues according to any one of claims 9 to 13, wherein the adhesive glue is a glue having at least two components and wherein the processing unit is configured to control at least two independent digital inkjet print nozzles (7), each configured to apply a different component and wherein the processing unit is adapted for selecting the amount of the at least two components per unit area to be applied on the surface (1.1) of the first element (1) and/or on the surface (2.1) of the at least one second element (2).

15. The method for applying adhesive glues according to any one of claims 9 to 14, comprising selecting the amount of adhesive glue (4) per unit area to be deposited on the surface (1.1) to be bonded of the first element (2) and/or on the surface (2.1) to be bonded of the at least one second element (2) to be bonded taking into account the required open time for the adhesive glue (4).
